# EUROPÄISCHE PATENTSCHRIFT

(11) **EP 2 362 095 B1**
(45) Veröffentlichungstag und Bekanntmachung des Hinweises auf die Patenterteilung: **10.04.2019**
(21) Anmeldenummer: 10008453.2
(22) Anmeldetag: 13.08.2010
(51) Int. Cl.: F03G 7/06, G05D 23/02

(54) **Thermostatisches Arbeitselement und Verfahren zum Herstellen eines thermostatischen Arbeitselements**
Method for producing a thermostatic work element and thermostatic work element
Elément de travail thermostatique et procédé de fabrication d'un élément de travail thermostatique

(30) Priorität: 18.02.2010 DE 102010008496
(43) Veröffentlichungstag der Anmeldung: 31.08.2011
(73) Patentinhaber: BorgWarner Esslingen GmbH, 73730 Esslingen am Neckar (DE)
(72) Erfinder: Wahler, Hans, 73728 Esslingen (DE); Bareis, Bernd, 73527 Täferrot-Utzstetten (DE); Kasper, Klaus, 77704 Oberkirch (DE)
(74) Vertreter: Twelmeier Mommer & Partner

(56) Entgegenhaltungen:
- EP-A2- 1 475 685
- US-A- 3 075 348
- US-B1- 6 764 020

## Beschreibung

Die Erfindung bezieht sich auf ein thermostatisches Arbeitselement, mit einem Gehäuse, das einen Dehnstoff enthält, dessen Volumen temperaturabhängig ist und der als Mittel zum Austreiben eines Arbeitskolbens dient. Die Erfindung bezieht sich ferner auf ein Verfahren zum Herstellen eines thermostatischen Arbeitselements.

Es wurde schon in der Vergangenheit angestrebt, die Wärmeleitung bei thermostatischen Arbeitselementen zu verbessern und damit deren Reaktionszeit zu verkürzen. Bekannt sind hierzu z. B. dem Dehnstoff zugemischte metallische Zusatzstoffe, z. B. in Form von Messingspänen oder Aluminiumpulver. Diese Zusatzstoffe haben den Nachteil, dass die Mischung aus Dehnstoff und Zusatzstoff sich über die Zeit entmischt, wodurch sich das Reaktionsverhalten des thermostatischen Arbeitselements verändert. Die Reaktionszeit wird größer. Nachteilig ist, dass dies im Laufe der Einsatzdauer solcher Arbeitselemente geschieht, ohne dass sich dies in irgendeiner Weise, außer durch Messen, anzeigt. Selbst bei Feststellung derartiger Veränderungen lassen sich diese in der Regel nicht beseitigen. Es wurde auch schon vorgeschlagen, dem Dehnstoff als Zusatzstoff expandiertes Graphit zuzusetzen. Die Verwendung eines solchen Blähgraphits ist aufwendig und teuer. Allein die Herstellung von Blähgraphit erfordert einen hohen Kostenaufwand. Nachteilig ist ferner das Einbringen einer solchen Mischung in fester Form in das Gehäuse des thermostatischen Arbeitselements. Auch dies ist aufwendig und ohnehin nur bei glatt durchgehenden Innenwänden des Gehäuses möglich, wenn eine vollständige Füllung des Gehäuseinneren erfolgen soll.

Aus der EP 1 475 685 A2 sind ein thermostatisches Arbeitselement gemäß dem Oberbegriff von Anspruch 1 und ein Verfahren zur Herstellung eines solchen gemäß dem Oberbegriff von Anspruch 4 bekannt.

Hierbei wird den Stoff des thermostatischen Arbeitselements als Zusatzstoff expandiertes Graphit zugesetzt. Bei expandiertem Graphit handelt es sich um durch Thermolyse expandiertes Graphit, dessen Endvolumen ein Vielfaches des Ausgangsvolumens beträgt. Das expandierte Graphit kann in Form von Graphitflocken oder in Form von Pulver zugegeben werden.

Der Nachteil bei der Verwendung von expandiertem Graphit als Zusatzstoff besteht insbesondere in der aufwendigen Herstellung und den hohen Kosten. Nachteilig ist ferner das Einbringen einer solchen Mischung in fester Form in das Gehäuse des thermostatischen Arbeitselements.

Aus der US 6,764,020 ist es grundsätzlich bekannt, als Dehnstoff Wachs und ein Füllmaterial, wie etwa Kupfer und/oder Graphit zu verwenden.

Aus der US 3,075,348 A ist es ferner bekannt, als Dehnstoff ein wachsartiges Material oder Silikon-Flüssigkeit zu verwenden, wobei eine gewisse Menge von zerkleinertem Graphit zugesetzt wird.

Vor diesem Hintergrund liegt der Erfindung die Aufgabe zugrunde, ein thermostatisches Arbeitselement zu schaffen, bei dem mit einfachen und kostengünstigen Mitteln die Ansprechzeit verbessert wird und für eine möglichst lange Gebrauchsdauer ohne Änderung der Reaktionszeit aufrechterhalten bleibt. Ferner soll ein Verfahren zur Herstellung eines solchen thermostatischen Arbeitselements angegeben werden.

Diese Aufgabe wird durch ein thermostatisches Arbeitselement mit den Merkmalen des Anspruchs 1 und durch ein Verfahren mit den Merkmalen des Anspruchs 4 gelöst.

Die Zumischung eines solchen Zusatzstoffes aus gemahlenem Natur-Graphit zum Dehnstoff hat vielfältige Vorteile. Der Zusatzstoff ist sehr gut einzumischen, weist sehr homogene Partikel auf und neigt nicht zur Sedimentbildung. Die Gefahr einer etwaigen Entmischung des Gemischs aus Dehnstoff und Zusatzstoff und damit einer Veränderung der Reaktionszeit besteht nicht. Der Zusatzstoff gewährleistet im Übrigen eine hohe thermische Leitfähigkeit und hat zugleich den Vorteil erhöhter Schmierfähigkeit aufgrund Reduzierung des Reibungskoeffizienten.

Weitere besondere Erfindungsmerkmale und Ausgestaltungen ergeben sich aus den abhängigen Ansprüchen.

Vorteilhaft kann ein thermostatisches Arbeitselement sein, das ein Gehäuse und einen Dehnstoff enthält, dessen Volumen temperaturabhängig ist und der als Mittel zum Austreiben eines Arbeitskolbens dient, wobei im Gehäuseinneren entweder nur Dehnstoff, z. B. Wachs, enthalten ist oder eine Mischung aus Dehnstoff und Zusatzstoff in Form gemahlenen Natur-Graphits. In beiden Fällen ist es vorteilhaft, wenn im Inneren des Gehäuses die Wärmeleitung zwischen Gehäuse und Dehnstoff steigernde Mittel enthalten sind, z. B. metallische Leitelemente und/oder Leitpartikel. Die Mittel können aus Einlagen gebildet sein. Besonders vorteilhaft sind solche Mittel, die aus inneren Vorsprüngen und/oder Vertiefungen auf der Innenseite des Gehäuses gebildet sind, z. B. aus Rippen, Gewindegängen eines Innengewindes od. dgl.

Eine besonders vorteilhafte Ausführungsform eines thermostatischen Arbeitselements ergibt sich dann, wenn das Innere, das eine Mischung aus Dehnstoff und gemahlenem Natur-Graphit enthält, mittels einer Membran dicht verschlossen ist, auf der der Arbeitskolben aufsitzt und mittels der der Arbeitskolben austreibbar ist. Ein solches Arbeitselement hat den Vorteil deutlich reduzierter Reibung, wodurch sich eine kurze Stellzeit und hohe Regelgenauigkeit ergeben. Ein derartiges Arbeitselement kann mittels eines z. B. elektrischen Heizelements beheizbar sein. Von Vorteil kann es sein, wenn im Inneren des Gehäuses ein daran befestigtes elektrisches Heizelement enthalten ist, das mit dem Gemisch aus Dehnstoff und Zusatzstoff zumindest indirekt in Berührungskontakt steht. Das elektrische Heizelement kann in vorteilhafterweise aus einem elektrisch beheizten Stiftelement gebildet sein, das vom Boden des Gehäuses her in das Gehäuseinnere hinein ragt. Von Vorteil kann es sein, wenn das Stiftelement im Inneren zumindest eine elektrische Heizwicklung enthält, die mittels von außen her in das Stiftelement geführter Leitungen gespeist wird. Das Heizelement, insbesondere in Form des elektrisch beheizten Stiftelements, ist fest und dicht mit dem Gehäuse des Arbeitselements verbunden. Die Befestigung kann durch Presssitz, Löten, Schweißen, Schrauben od. dgl. erfolgen. Das innere Heizelement in Form des Heizstabes hat den besonderen Vorteil, dass der durch die Beheizung im Gehäuseinneren und im Gemisch aus Dehnstoff und gemahlenem Natur-Graphit bewirkte Wärmeeintrag entkoppelt ist von der direkt oder indirekt über das Gehäuse erfolgenden Wärmeabfuhr nach außen. Aufgrund des Heizelements kann der Arbeitspunkt des thermostatischen Arbeitselements eingestellt und dessen Regelungsverhalten unter Beibehaltung der Vorteile, die ein solches mit Membran und darauf aufsitzendem Arbeitskolben hat, verbessert werden. Ein solches thermostatisches Arbeitselement ist mit Vorteil vielfältig einsetzbar, unter anderem auch bei Sanitärarmaturen zur Regelung der Auslasstemperatur in einem Wasserkreislauf.

Bei einer vorteilhaften anderen Gestaltung des Arbeitselements ist vorgesehen, dass das Innere des Gehäuses, das eine Mischung aus Dehnstoff und gemahlenem Natur-Graphit enthält, mittels eines Dichtstopfens dicht verschlossen ist und der Dichtstopfen von einem in die Mischung aus Dehnstoff und gemahlenem Naturgraphit eintauchenden Arbeitskolben durchsetzt ist, der aus der Mischung austreibbar ist. Der Arbeitskolben steht mit seinem im Gehäuseinneren befindlichen Teil in direktem Kontakt mit der Mischung aus Dehnstoff und Zusatzstoff. Hierbei wirken sich die Vorteile des Zusatzstoffes aus gemahlenem Natur-Graphit besonders günstig aus, da aufgrund der Reduzierung des Reibungskoeffizienten eine geringere Reibung vorliegt mit dem Vorteil kurzer Stellzeit und großer Regelgenauigkeit. Auch ein thermostatisches Arbeitselement dieser Gestaltung kann mit einem z. B. elektrischen Heizelement versehen sein. Dieses kann z. B. im Inneren des Arbeitskolbens enthalten sein.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: einen schematischen Schnitt eines thermostatischen Arbeitselements gemäß einem ersten Ausführungsbeispiel,
- Fig. 2: einen schematischen Schnitt eines thermostatischen Arbeitselements gemäß einem zweiten Ausführungsbeispiel,
- Fig. 3: einen schematischen Schnitt eines thermostatischen Arbeitselements gemäß einem dritten Ausführungsbeispiel.

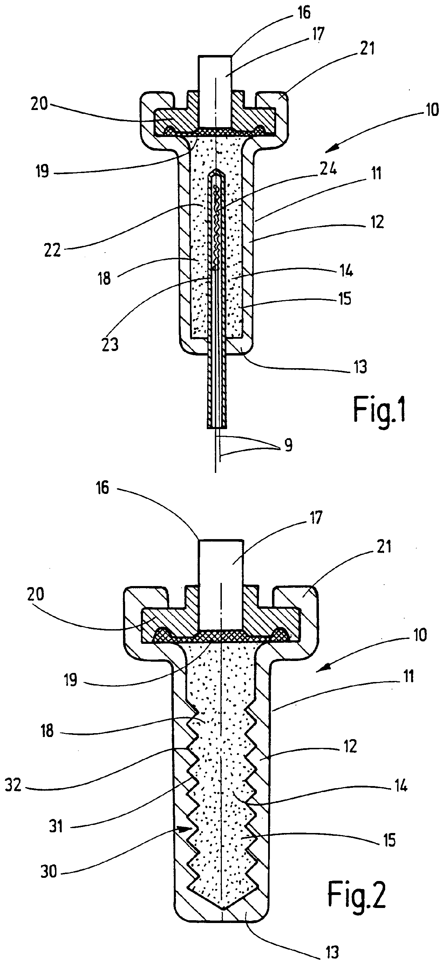

In Fig. 1 und 2 ist ein thermostatisches Arbeitselement 10 gezeigt, mit einem etwa topfförmigen, länglichen Gehäuse 11, das einen etwa zylindrischen, rohrförmigen Gehäusekörper 12 und einen damit einstückigen Boden 13 aufweist. Im Gehäuseinneren 14 ist ein Dehnstoff 15 enthalten, dessen Volumen temperaturabhängig ist und der als Mittel zum Austreiben eines Arbeitskolbens 16 dient, der beim ersten und zweiten Ausführungsbeispiel gemäß Fig. 1 und 2 aus einem insbesondere zylindrischen Stift 17 besteht. Dem Dehnstoff 15 ist ein Zusatzstoff 18 zugemischt, der aus gemahlenem Natur-Graphit besteht. Hierbei handelt es sich um einen hochreinen und spezialgemahlenen Natur-Graphit mit einer durch den Mahlvorgang sich ergebenden speziellen Teilchenform. Dieser Zusatzstoff aus gemahlenem Natur-Graphit hat die Eigenschaft, dass dieser sich sehr gut einmischen lässt, sehr homogene Partikel aufweist und nicht zur Sedimentbildung neigt. Der Zusatzstoff 18 führt zu einer wesentlichen Erhöhung der thermischen Leitfähigkeit und Reduzierung des Reibungskoeffizienten der Mischung aus Dehnstoff 15 und Zusatzstoff 18.

Das Gehäuseinnere 14, das diese besagte Mischung 15, 18 enthält, ist an dem dem Boden 13 gegenüberliegenden Ende mittels einer Membran 19 dicht verschlossen. Die Membran 19 hat etwa gummielastische Eigenschaften und ist verformungsfähig. Die Membran 19 ist mittels eines Führungsteils 20 eingespannt, das mittels eines Bördelrandes 21 am oberen Ende des Gehäusekörpers 12 gehalten ist. Das Führungsteil 20 führt den Arbeitskolben 16 im Form des Stiftes 17, der mit seinem unteren Ende auf der Membran 19 aufsitzt und bei einer temperaturbedingten Volumenerhöhung des Dehnstoffes 15 und Zusatzstoffes 18 durch entsprechende Verformung der Membran 19 in Fig. 1 nach oben ausgetrieben wird. Nicht gezeigt sind dem Arbeitselement 10 zugeordnete Rückstellmittel, z. B. federelastische Rückstellmittel, die zur Rückstellung des Arbeitskolbens 16 dann dienen, wenn das Arbeitselement 10, insbesondere das Gehäuse 11 mit Inhalt, erkaltet und der Dehnstoff 15 und Zusatzstoff 18 eine Volumenreduzierung erfährt.

Das thermostatische Arbeitselement 10 kann beheizbar sein, z. B. mittels eines elektrischen Heizelements, das z. B. außen im Bereich des Bodens 13 angebracht ist oder den Gehäusekörper 12 als Manschette umgibt. Beim gezeigten Ausführungsbeispiel ist ein inneres elektrisches Heizelement 22 vorgesehen, das im Gehäuseinneren 14 enthalten ist und mit dem Gemisch aus Dehnstoff 15 und Zusatzstoff 18 zumindest indirekt in Berührungskontakt steht. Das elektrische Heizelement 22 ist aus einem elektrisch beheizten Stiftelement 23 gebildet, das vom Boden 13 des Gehäuses 11 her tief in das Gehäuseinnere 14 hineinragt. Das Stiftelement 23 ist durch den Boden 13 hindurchgeführt, wobei in diesem Bereich eine Abdichtung und Befestigung des Stiftelements 23 z. B. durch Presssitz, Löten, Schrauben od. dgl. geschieht. Das Stiftelement 23 besteht aus einem Rohr, das im Inneren eine nur schematisch angedeutete elektrische Heizwicklung 24 enthält, die mittels von außen her in das Stiftelement 23 geführter, nur angedeuteter elektrischer Leitungen 9 gespeist wird. Aufgrund dieses elektrischen Heizelements 22 ist das Regelverhalten des Arbeitselements 10 unter Beibehaltung der sonstigen Vorteile dieses verbessert. Es wird eine kurze Stellzeit und hohe Regelgenauigkeit erreicht.

Der Zusatzstoff 18 ist so beschaffen, dass dessen mittlere Teilchengröße D50 im Bereich zwischen etwa 2 µm und 8 µm liegt. Der Zusatzstoff 18 in Form des gemahlenen Natur-Graphits kann einen Gewichtsanteil von etwa zwischen 20% und 35% haben. Bei einem Gewichtsanteil von 20% beträgt die Wärmeleitfähigkeit der Mischung aus reinem Dehnstoff 15 und gemahlenem Natur-Graphit 18 etwa 1,1 W/mK, bei einem Gewichtsanteil von 30% etwa 1,35 W/mK.

Der Dehnstoff 15 besteht vorzugsweise aus reinem Wachs. Dieses kann eine Wärmeleitfähigkeit von etwa 0,3 W/mK haben.

Die Mischung aus Dehnstoff 15 und Zusatzstoff 18 in Form gemahlenen Natur-Graphits kann in fester Form vorliegen, z. B. als Granulat, als Pellets od. dgl. Stattdessen kann dem Dehnstoff 15 der Zusatzstoff 18 auch in flüssiger Form zugegeben werden.

Bei der Herstellung des thermostatischen Arbeitselements 10 gemäß Fig. 1 wird dem Dehnstoff 15 der Zusatzstoff 18 aus gemahlenem Natur-Graphit zugemischt. Die Mischung mit dem Dehnstoff 15 kann in fester Form und bereits vor dem Einbringen erfolgen. Die Mischung aus Dehnstoff 15 und Zusatzstoff 18 kann in fester Form in das Gehäuse 11 eingebracht werden, z. B. in Granulatform, als Pellets od. dgl. Stattdessen kann die Mischung auch in der Weise geschehen, dass dem Dehnstoff 15 der Zusatzstoff 18 in flüssiger Phase zugesetzt wird. Die Mischung aus Dehnstoff 15 und Zusatzstoff 18 kann auch in flüssiger Phase in das Gehäuse 11 eingebracht werden.

Das beschriebene thermostatische Arbeitselement 10 hat den Vorteil, dass die Mischung aus Dehnstoff 15 und Zusatzstoff 18 in Form gemahlenen Natur-Graphits sich auch über eine lange Gebrauchsdauer nicht entmischt, wodurch sich sonst die Reaktionszeit vergrößern würde. Der Vorteil des Arbeitselements 10 liegt in der erreichten Steigerung der Wärmeleitung zwischen Gehäuse 11 und darin enthaltenem Dehnstoff 15 mit Zusatzstoff 18. Dies führt zu einer Verkürzung der Reaktionszeit des Arbeitselements 10. Diese Vorteile werden ohne großen Aufwand erreicht. Das Arbeitselement 10 ist einfach und vor allem kostengünstig und bietet Gewähr, dass dessen gesteigerte Ansprechzeit auch bei langer Gebrauchs- und Lebensdauer aufrechterhalten bleibt.

Bei einem nicht gezeigten Ausführungsbeispiel des Arbeitselement 10 gemäß Fig. 1 können im Gehäuseinneren 14 die Wärmeleitung zwischen dem Gehäuse 11 und dem Dehnstoff 15, ggf. mit zugemischten Zusatzstoff 18, steigernde Mittel enthalten sein, die z. B. aus metallischen Leitelementen und/oder Leitpartikeln bestehen. Diese Mittel können als Einlagen gebildet sein, z. B. in das Gehäuseinnere 14 eingelegte sternförmige metallische Leitelemente. Dem Fachmann sind vielfältige Arten solche die Wärmeleitung steigender Mittel geläufig, die hier nicht im Einzelnen gezeigt und beschrieben werden müssen.

Das in Fig. 2 gezeigte Ausführungsbeispiel eines thermostatischen Arbeitselements 10 entspricht demjenigen in Fig. 1, wobei zusätzlich die Wärmeleitung steigernde Mittel 30 vorgesehen sind. Diese bestehen bei dem zweiten Ausführungsbeispiel gemäß Fig. 2 aus auf der Innenseite des Gehäusekörpers 12 gebildeten inneren Vorsprüngen 31, die sich mit Vertiefungen 32 abwechseln und die Kontaktfläche auf der Innenseite des Gehäusekörpers 12 vergrößern. Diese Vorsprünge 31 können vielfältiger Art sein und z. B. aus Rippen od. dgl. gebildet sein. Mit Vorzug sind die Vorsprünge 31 z. B. durch Gewindegänge eines Innengewindes od. dgl. geschaffen. Die Einbringung eines derartigen Innengewindes ist einfach und bedarf keines großen Aufwandes. Bei einem gedrehten Gehäusekörper 12 wird das Gewinde geschnitten. Bei einem gezogenen Gehäusekörper 12 kann das Innengewinde geformt werden. Bei einem derartigen Ausführungsbeispiel erweist es sich als besonders vorteilhaft, dass die Mischung aus Dehnstoff 15 und Zusatzstoff 18 auch in flüssiger Form in das Gehäuse 11 eingebracht werden kann, wobei die Mischung auch die durch Vertiefungen 32 gebildeten Bereiche oder sonstige durch Hinterschnitte "abgeschattete" Bereiche gut ausfüllen kann.

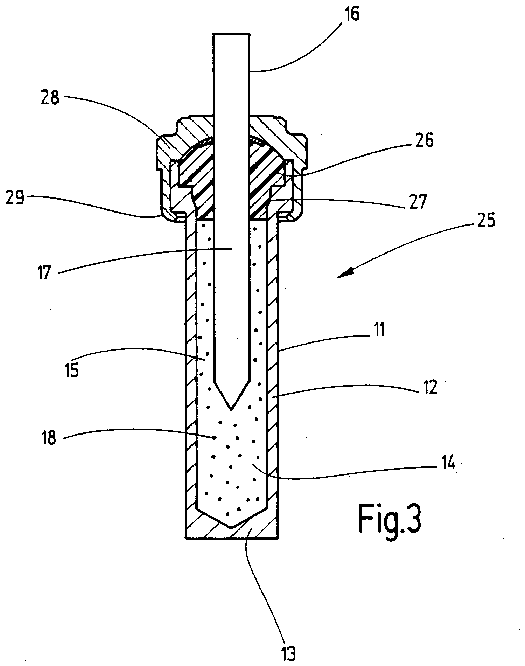

Bei dem in Fig. 3 gezeigten dritten Ausführungsbeispiel sind für die Teile, die dem ersten Ausführungsbeispiel gemäß Fig. 1 entsprechen, gleiche Bezugszeichen verwendet, so dass dadurch zur Vermeidung von Wiederholungen auf die Beschreibung des ersten Ausführungsbeispieles Bezug genommen ist.

In Fig. 3 ist ein thermostatisches Arbeitselement 25 gezeigt, bei dem statt einer Membran 19 am oberen Ende des Gehäusekörpers 12 ein Dichtstopfen 26 vorgesehen ist, der mit einem Absatz 27 in das Gehäuseinnere 14 hineinragt und von einer Kappe 28 überdeckt ist, die mittels eines nach unten reichenden Bördelrandes 29 am Gehäuse 11 gehalten ist. Der Arbeitskolben 16 ist aus einem langen zylindrischen Stift 17 gebildet, der die Kappe 28 und den Dichtstopfen 26 durchsetzt und relativ weit in die Mischung aus Dehnstoff 15 und Zusatzstoff 18 eintaucht und bei Temperaturerhöhung und Volumenausdehnung aus dieser Mischung 15, 18 austreibbar ist. Der Stift 17 hat unmittelbar Kontakt mit der Mischung aus Dehnstoff 15 und Zusatzstoff 18. Bei dieser Gestaltung des Arbeitselements 25 wirkt sich die durch den Zusatzstoff 18 aus gemahlenem Natur-Graphit erreichte Reduzierung des Reibungskoeffizienten und Steigerung der Gleitfähigkeit als besonders günstig aus, da bei der Axialbewegung des Arbeitskolbens 16 eine Relativbewegung zwischen diesem und der Mischung aus Dehnstoff 15 und dem Zusatzstoff 18 geschieht.

Auch dieses Arbeitselement 25 kann mit einem nicht weiter gezeigten elektrischen Heizelement versehen sein, wobei dieses z. B. auch im Inneren des Arbeitskolbens 16 angeordnet sein kann. Auch ist es möglich, als Arbeitskolben ein Stiftelement 23 gemäß Fig. 1 einzusetzen, wobei dann die elektrischen Leitungen 9 oben herausgeführt werden.

## Patentansprüche

1. Thermostatisches Arbeitselement, mit einem Gehäuse (11), das einen Dehnstoff (15) enthält, dessen Volumen temperaturabhängig ist und der als Mittel zum Austreiben eines Arbeitskolbens (16) dient,
wobei dem Dehnstoff (15) ein Zusatzstoff (18) aus Graphit zugemischt ist,
**dadurch gekennzeichnet,**
**dass** der Dehnstoff (15) aus reinem Wachs besteht und dass dem Dehnstoff (15) gemahlener Natur-Graphit (18) zugemischt ist, dessen mittlere Teilchengröße D50 im Bereich zwischen 2 µm und 8 µm liegt.

2. Thermostatisches Arbeitselement nach Anspruch 1,
**dadurch gekennzeichnet,**
**dass** der gemahlene Natur-Graphit (18) einen Gewichtsanteil von etwa zwischen 20% und 35% hat.

3. Thermostatisches Arbeitselement nach Anspruch 2,
**dadurch gekennzeichnet,**
**dass** die Wärmeleitfähigkeit der Mischung aus reinem Dehnstoff (15) und gemahlenem Natur-Graphit (18) bei einem Gewichtsanteil von 20% etwa 1,1 W/mK beträgt oder bei einem Gewichtsanteil von 30% etwa 1,35 W/mK beträgt.

4. Verfahren zum Herstellen eines thermostatischen Arbeitselements, das ein Gehäuse aufweist, in das ein Dehnstoff (15) und ein Zusatzstoff (18) aus Graphit eingebracht werden,
**dadurch gekennzeichnet,**
**dass** dem Dehnstoff (15) ein Zusatzstoff (18) aus gemahlenem Natur-Graphit zugemischt wird, dessen mittlere Teilchengröße D50 im Bereich zwischen 2 µm und 8 µm liegt.

5. Verfahren nach Anspruch 4,
**dadurch gekennzeichnet,**
**dass** die Mischung in fester Form in das Gehäuse (11) eingebracht wird.

6. Verfahren nach Anspruch 4,
**dadurch gekennzeichnet,**
**dass** die Mischung in flüssiger Form in das Gehäuse (11) eingebracht wird.

7. Thermostatisches Arbeitselement nach Anspruch 1
**dadurch gekennzeichnet,**
**dass** im Inneren des Gehäuses (11) die Wärmeleitung zwischen Gehäuse (11) und Dehnstoff (15) steigernde Mittel (30) enthalten sind.

8. Thermostatisches Arbeitselement nach Anspruch 7,
**dadurch gekennzeichnet,**
**dass** die Mittel aus metallischen Leitelementen und/oder Leitpartikeln bestehen.

9. Thermostatisches Arbeitselement nach Anspruch 7 oder 8,
**dadurch gekennzeichnet,**
**dass** die Mittel aus Einlagen gebildet sind.

10. Thermostatisches Arbeitselement nach Anspruch 7 oder 8,
**dadurch gekennzeichnet,**
**dass** die Mittel (30) aus inneren Vorsprüngen (31) und/oder Vertiefungen (32) auf der Innenseite des Gehäuses (11) gebildet sind.

11. Thermostatisches Arbeitselement nach einem der Ansprüche 1 bis 3 oder 7 bis 10,
**dadurch gekennzeichnet,**
**dass** das Innere des Gehäuses (11), das eine Mischung aus Dehnstoff (15) und gemahlenem Natur-Graphit (18) enthält, mittels einer Membran (19) dicht verschlossen ist, auf der der Arbeitskolben (16) aufsitzt und mittels der der Arbeitskolben (16) austreibbar ist.

12. Thermostatisches Arbeitselement nach Anspruch 11,
**dadurch gekennzeichnet,**
**dass** im Inneren des Gehäuses (11) ein daran befestigtes Heizelement (22) enthalten ist, das zumindest indirekt mit dem Gemisch aus Dehnstoff (15) und Zusatzstoff (18) in Berührungskontakt steht.

13. Thermostatisches Arbeitselement nach Anspruch 12,
**dadurch gekennzeichnet,**
**dass** das Heizelement (22) aus einem elektrisch beheizten Stiftelement (23) gebildet ist, das vom Boden (13) des Gehäuses (11) her in das Gehäuseinnere (14) hineinragt.

14. Thermostatisches Arbeitselement nach Anspruch 13,
**dadurch gekennzeichnet,**
**dass** das Stiftelement (23) im Inneren zumindest eine elektrische Heizwicklung (24) enthält, die mittels von außen her in das Stiftelement (23) geführter Leitungen (9) gespeist wird.

15. Thermostatisches Arbeitselement nach einem der Ansprüche 1 bis 3 oder 7 bis 14,
**dadurch gekennzeichnet,**
**dass** das Innere des Gehäuses (11), das eine Mischung aus Dehnstoff (15) und gemahlenem Natur-Graphit (18) enthält, mittels eines Dichtstopfens (26) dicht verschlossen ist und der Dichtstopfen (26) von einem in die Mischung aus Dehnstoff (15) und gemahlenem Natur-Graphit (18) eintauchenden Arbeitskolben (16) durchsetzt ist, der aus der Mischung austreibbar ist.

## Claims

1. Thermostatic working element with a housing (11) which contains an expanding material (15), the volume of which is temperature-dependent and which acts as the means for driving out a working piston (16) wherein an additive (18) made of graphite is mixed into the expanding material (15),
**characterised in that**
the expanding material (15) consists of pure wax and **in that** ground natural graphite (18), whose mean particle size D50 is in the range between 2 µm and 8 µm, is mixed into the expanding material (15).

2. Thermostatic working element according to claim 1,
**characterised in that**
the ground natural graphite (18) has a proportion by weight of around between 20% and 35%.

3. Thermostatic working element according to claim 2,
**characterised in that**
the thermal conductivity of the mixture of pure expanding material (15) and ground natural graphic (18) with a proportion by weight of 20% is around 1.1 W/mK or with a proportion by weight of 30% is around 1.35 W/mK.

4. Method of producing a thermostatic working element which has a housing into which an expanding substance (15) and an additive (18) made of graphite can be introduced,
**characterised in that**
an additive (18) of ground natural graphite, whose mean particle size D50 is in the range between 2 µm and 8 µm, is mixed into the expanding material (15).

5. Method according to claim 4,
**characterised in that**
the mixture is introduced into the housing (11) in solid form.

6. Method according to claim 4,
**characterised in that**
the mixture is introduced into the housing (11) in liquid form.

7. Thermostatic working element according to claim 1,
**characterised in that**
contained in the interior of the housing (11) are means (30) that increase the thermal conductivity between the housing (11) and expanding material (15).

8. Thermostatic working element according to claim 7,
**characterised in that**
the means comprise metallic thermally conductive elements and/or conductive particles.

9. Thermostatic working element according to claim 7 or 8,
**characterised in that**
the means are formed of inserts.

10. Thermostatic working element according to claim 7 or 8,
**characterised in that**
the means (30) are formed of inner projections (31) and/or recesses (32) on the inner side of the housing (11).

11. Thermostatic working element according to any one of claims 1 to 3 or 7 to 10,
**characterised in that**
the interior of the housing (11) which contains a mixture of expanding material (15) and ground natural graphite (18) is tightly closed by a membrane (19) on which the working piston (16) rests and by means of which the working piston (16) can be driven out.

12. Thermostatic working element according to claim 11,
**characterised in that**
contained in the interior of the housing (11) is a heating element (22) attached thereto which is at least indirectly in contact with the mixture of expanding material (15) and additive (18).

13. Thermostatic working element according to claim 12,
**characterised in that**
the heating element (22) is formed of an electrically heated pin element (23) which projects from the base (13) of the housing (11) into the interior (14) of the housing.

14. Thermostatic working element according to claim 13,
**characterised in that**
in its interior the pin element (23) contains at least one electrical heating coil (24) which is supplied by way of leads (9) extending from outside into the pin element (23).

15. Thermostatic working element according to any one of claims 1 to 3 or 7 to 10,
**characterised in that**
the interior of the housing (11) which contains a mixture of expanding material (15) and ground natural graphite (18) is tightly closed by means of a sealing stopper (26) and the sealing stopper (26) is penetrated by a working piston (16) which dips into the mixture of expanding material (15) and ground natural graphic (18) and can be driven out of the mixture.

## Revendications

1. Élément de travail thermostatique, pourvu d'un boîtier (11), qui contient une matière expansible (15) dont le volume est variable en fonction de la température et qui fait office de moyen d'expulsion d'un piston moteur (16), à la matière expansible (15) étant mélangé un additif (18) en graphite, **caractérisé en ce que** la matière expansible (15) est constituée de cire pure et **en ce qu'**à la matière expansible (15) est mélangé du graphite naturel (18) broyé dont la taille moyenne D50 des particules se situe dans l'ordre compris entre 2 µm et 8 µm.

2. Élément de travail thermostatique selon la revendication 1, **caractérisé en ce que** le graphite naturel (18) broyé détient une part en poids comprise approximativement entre 20 % et 35 %.

3. Élément de travail thermostatique selon la revendication 2, **caractérisé en ce que** pour une part en poids de 20 %, la conductibilité thermique du mélange en matière expansible (15) pure et en graphite naturel (18) broyé s'élève à environ 1,1 W/mK ou pour une part en poids de 30 % s'élève à environ 1,35 W/mK.

4. Procédé, destiné à fabriquer un élément de travail thermostatique, lequel comporte un boîtier dans lequel on introduit une matière expansible (15) et un additif (18) en graphite, **caractérisé en ce qu'**à la matière expansible (15) on mélange un additif (18) en graphite naturel broyé dont la taille moyenne D50 des particules se situe dans l'ordre compris entre 2 µm et 8 µm.

5. Procédé selon la revendication 4, **caractérisé en ce qu'**on introduit le mélange sous forme solide dans le boîtier (11).

6. Procédé selon la revendication 4, **caractérisé en ce qu'**on introduit le mélange sous forme liquide dans le boîtier (11).

7. Élément de travail thermostatique selon la revendication 1, **caractérisé en ce qu'**à l'intérieur du boîtier (11) sont contenus des moyens (30) augmentant la conduction thermique entre le boîtier (11) et la matière expansible (15).

8. Élément de travail thermostatique selon la revendication 7, **caractérisé en ce que** les moyens sont constitués d'éléments conducteurs métalliques et/ou de particules conductrices.

9. Élément de travail thermostatique selon la revendication 7 ou 8, **caractérisé en ce que** les moyens sont constitués d'inserts.

10. Élément de travail thermostatique selon la revendication 7 ou 8, **caractérisé en ce que** les moyens (30) sont constitués de saillies internes (31) et/ou de creux (32) sur la face intérieure du boîtier (11).

11. Élément de travail thermostatique selon l'une quelconque des revendications 1 à 3 ou 7 à 10, **caractérisé en ce que** l'intérieur du boîtier (11), qui contient un mélange de matière expansible (15) et de graphite naturel (18) broyé est fermé de manière étanche à l'aide d'une membrane (19) sur laquelle repose le piston moteur (16) et à l'aide de laquelle le piston moteur (16) peut être expulsé.

12. Élément de travail thermostatique selon la revendication 11, **caractérisé en ce qu'**à l'intérieur du boîtier (11) est contenu un élément chauffant (22) fixé sur celui-ci, qui est en contact au moins indirect avec le mélange de matière expansible (15) et d'additif (18).

13. Élément de travail thermostatique selon la revendication 12, **caractérisé en ce que** l'élément chauffant (22) est formé par un élément en forme de tige (23) chauffé électriquement, qui à partir du fond inférieur (13) du boîtier (11) saillit à l'intérieur du boîtier (14).

14. Élément de travail thermostatique selon la revendication 13, **caractérisé en ce que** l'élément en forme de tige (23) contient en son intérieur au moins un serpentin chauffant (24) électrique, qui est alimenté par des conduits (9) tirés à partir de l'extérieur dans l'élément en forme de tige (23).

15. Élément de travail thermostatique selon l'une quelconque des revendications 1 à 3 ou 7 à 14, **caractérisé en ce que** l'intérieur du boîtier (11) qui contient un mélange de matière expansible (15) et de graphite naturel (18) broyé est fermé de manière étanche à l'aide d'un tampon d'étanchéité (26) et **en ce que** le tampon d'étanchéité (26) est traversé par un piston moteur (16) plongeant dans le mélange de matière expansible (15) et de graphite naturel (18) broyé qui est susceptible d'être expulsé hors du mélange.
